# FASCICULE DE BREVET EUROPEEN

(11) **EP 3 330 891 B1**
(45) Date de publication et mention de la délivrance du brevet: **11.05.2022**
(21) Numéro de dépôt: 17203996.8
(22) Date de dépôt: 28.11.2017
(51) Int. Cl.: G06V 10/10, G06V 40/16, G06V 40/10

(54) **SYSTÈME DE COMMUNICATION AVEC DISPOSITIF ANTIFRAUDE**
KOMMUNIKATIONSSYSTEM MIT BETRUGSBEKÄMPFUNGSVORRICHTUNG
COMMUNICATION SYSTEM WITH TAMPER-PROOF DEVICE

(30) Priorité: 30.11.2016 FR 1661737
(43) Date de publication de la demande: 06.06.2018
(73) Titulaire: Idemia Identity & Security France, 92400 Courbevoie (FR)
(72) Inventeur: RIEUL, François, 92130 ISSY-LES-MOULINEAUX (FR); BEAUDET, Jean, 92130 ISSY-LES-MOULINEAUX (FR); DOUBLET, Julien, 92130 ISSY-LES-MOULINEAUX (FR)
(74) Mandataire: Chauvin, Karen Laurence

(56) Documents cités:
- EP-A1- 2 560 123
- WO-A1-98/28707
- WO-A2-2008/059393
- US-A1- 2013 219 480
- Anonymous: "Steganography - Wikipedia", , 21 novembre 2016 (2016-11-21), XP055391073, Extrait de l'Internet: URL:https://en.wikipedia.org/w/index.php?t itle=Steganography&oldid=750696756 [extrait le 2017-07-14]
- SOOYEON KIM ET AL: "Face Liveness Detection Using Defocus", SENSORS, vol. 15, no. 1, 14 janvier 2015 (2015-01-14), pages 1537-1563, XP55492488, DOI: 10.3390/s150101537
- NITIN KHANNA ET AL: "Sensor Forensics: Printers, Cameras and Scanners, They Never Lie", MULTIMEDIA AND EXPO, 2007 IEEE INTERNATIONAL CONFERENCE ON, IEEE, PI, 1 juillet 2007 (2007-07-01), pages 20-23, XP031123551, ISBN: 978-1-4244-1016-3

## Description

L'invention concerne la détection des fraudes lors de l'acquisition d'informations biométriques.

### ARRIERE PLAN DE L'INVENTION

Il est connu d'équiper un terminal de communication de type smartphone d'un capteur d'images biométriques aux fins d'envoyer des données biométriques, via un réseau de communication, à un équipement informatique distant tel qu'un ordinateur ou un serveur.

Des techniques de fraude, d'usurpation d'identité d'un individu sont connues. Par exemple le fraudeur peut présenter devant le capteur d'images biométriques, des images imprimées ou une représentation volumique de cet individu (un mannequin).

Le fraudeur peut aussi afficher devant le capteur d'images biométriques, une séquence d'images vidéo représentant l'individu.

Le capteur d'images biométriques génère alors des images contenant des informations biométriques de l'individu sans que cet individu soit réellement présent devant le capteur d'images biométriques. On peut ainsi frauder le système d'acquisition d'informations biométriques.

Le document EP 2 560 123 A1 divulgue une solution selon laquelle l'équipement distant et le terminal échangent des données relatives aux paramètres d'illumination utilisés pour l'acquisition de l'image biométrique. Un fraudeur pourrait cependant intercepter ces données.

### OBJET DE L'INVENTION

Un objet de la présente invention est de fournir un moyen permettant de limiter le risque d'une telle fraude.

### RESUME DE L'INVENTION

A cette fin, il est proposé suivant l'invention, un système d'acquisition d'informations biométriques tel que défini par la revendication 1.

Le message transmis entre l'équipement distant et le terminal peut être un message émis par l'équipement distant à l'attention du terminal ou inversement un message émis par le terminal à l'attention de l'équipement distant, par exemple un message d'accusé de réception émis par le terminal et envoyé à l'équipement distant.

L'information codée n'est pas au sens de l'invention une instruction ou une commande exécutable directement par le terminal. Cette information correspond à l'indication d'une séquence d'éclairage selon un code préétabli et partagé par le terminal et l'équipement distant. L'information codée au sens de l'invention, si elle utilisée seule par le premier processeur pour essayer de l'exécuter est telle qu'elle ne peut induire aucune commande du dispositif d'éclairage et par conséquent aucune variation de l'éclairage. Un exemple d'information codée est par exemple le nombre de bits du message, une heure d'émission du message ou un numéro d'ordre de message ou les valeurs respectives de plusieurs bits du message, par exemple les valeurs des 5 derniers bits du message. Par contre, le premier processeur peut utiliser cette information codée comme une variable en fonction de laquelle, en suivant le code préétabli, il détermine une instruction de commande telle qu'une instruction de commande du dispositif d'éclairage. Cette instruction de commande est telle que lorsqu'elle est exécutée pendant l'acquisition d'une succession d'images par le capteur d'acquisition, elle induise des caractéristiques dans certaines au moins des images ainsi acquises, ces caractéristiques étant représentatives de l'information codée.

Le premier processeur, est programmé selon le code préétabli pour générer des commandes telles que :
- une commande de variation de conditions d'éclairage à l'attention du dispositif d'éclairage pour obtenir une séquence d'éclairage parfaitement prévisible si l'on connaît d'une part l'information codée utilisée et d'autre part le code préétabli de programmation du premier processeur ; et/ou
- une commande à l'attention d'une interface de communication (par exemple un écran ou un haut-parleur) pour délivrer à un utilisateur une instruction de réalisation d'actions qu'il doit réaliser pendant l'acquisition de la succession d'images (par exemple orienter sa tête d'une certaine manière ou effectuer un mouvement particulier vis-à-vis du capteur d'acquisition), cette ou ces actions étant parfaitement prévisible si l'on connaît d'une part l'information codée utilisée et d'autre part le code préétabli de programmation du premier processeur ; et/ou
- une commande de variation d'au moins un paramètre d'acquisition (par exemple un déplacement de point de focus), cette variation étant parfaitement prévisible si l'on connait d'une part l'information codée utilisée et d'autre part le code préétabli de programmation du premier processeur.

Le second processeur est programmé pour vérifier si les images de la succession d'images comportent des caractéristiques représentatives de ladite information codée.

Comme cette information codée est contenue dans un message transmis sur le réseau entre le terminal et l'équipement distant, elle constitue une information connue de ces deux entités (premier et second processeur). Le second processeur peut ainsi utiliser cette information codée qui n'est en rien une instruction exécutable comme une variable permettant de calculer à l'aide du code préétabli qu'il exécute, des caractéristiques représentatives de cette information codée qu'il doit retrouver dans les images s'il n'y a pas eu de tentative de fraude ou qui au contraire doivent être absentes de ces images s'il y a eu tentative de fraude.

Ces caractéristiques sont le résultat, observable dans les images, de l'exécution des instructions de commande pendant l'acquisition des images, ces instructions de commande ayant été préalablement calculées en fonction de l'information codée. Ainsi, l'exécution de ces instructions de commande induit dans les images des caractéristiques qui sont bien représentatives de l'information codée.

Le code préétabli est partagé entre les premier et second processeurs, c'est-à-dire qu'il est préenregistré au moment de la programmation des premier et second processeurs et il est ainsi connu au niveau du terminal et au niveau de l'équipement distant sans qu'il soit nécessaire de le transmettre via le réseau.

Connaissant les caractéristiques représentatives de l'information codée, par exemple une séquence d'éclairage exécutée suivant l'instruction de commande, le second processeur peut rechercher ces caractéristiques dans les images.

En fonction de la détection de ces caractéristiques représentatives, le second processeur génère un signal représentatif d'une détection de fraude.

Par exemple, si les caractéristiques représentatives ne sont pas identifiées dans les images de la succession d'images, alors le second processeur génère un signal indiquant qu'une tentative de fraude est détectée.

A contrario, si les caractéristiques représentatives de l'information codée, par exemple la séquence d'éclairage, sont identifiées dans les images de la succession d'images, alors le second processeur génère un signal indiquant qu'aucune tentative de fraude n'est détectée.

En résumé, l'invention permet de générer des instructions de commande (par exemple une instruction de variation d'éclairage) au niveau du terminal à l'aide d'une programmation du premier processeur qui utilise une information codée contenue dans un message dit normal, c'est à dire un message ne contenant en lui-même aucune instruction de variation d'éclairage.

Le second processeur qui est implanté au niveau de l'équipement distant peut ainsi déduire, des caractéristiques attendues qui devraient être induites dans les images d'une succession d'images acquises d'un individu si ces images sont effectivement acquises alors que l'instruction de commande est effectivement exécutée.

On peut ainsi vérifier si les images acquises sont bien réalisées avec un individu réellement présent face au capteur d'acquisition d'images pendant que l'instruction de commande est exécutée.

Un autre avantage de l'invention est qu'elle peut être mise en œuvre sans avoir à modifier la forme ou le contenu des messages transmis entre l'équipement distant et le terminal. L'intégration du système d'acquisition d'informations biométriques selon l'invention sur un système existant s'en trouve facilitée.

Un autre avantage de l'invention est qu'aucune instruction de commande du dispositif d'éclairage selon une séquence d'éclairage ne transite via le réseau, ce qui limite le risque de fraude par recherche d'instructions de commande du dispositif d'éclairage dans le message transmis.

De nombreux types d'informations codées (type de données) sont utilisables pour générer l'instruction de commande selon l'invention. Par exemple, l'information codée peut être un numéro de transaction.

Grâce à l'invention, l'information codée est non seulement utilisable pour générer l'instruction de commande mais aussi pour mettre en œuvre d'autres fonctions que la génération de cette instruction de commande.

Autre exemple, l'information codée peut être une information provenant d'un message selon un protocole de transmission de données normalisé utilisé pour mettre en œuvre une fonction bien particulière n'induisant normalement aucune caractéristique particulière dans des images acquises par le capteur d'acquisition.

Ainsi, un protocole standardisé de communication FIDO inclut la transmission d'un « chalenge » ou « assertion de chalenge » qui sert à vérifier si une clé privée est connue ou non. Suivant ce protocole FIDO pour vérifier la validité de clé, on transmet sur le réseau un message comprenant des données de « chalenge » ou « assertion de chalenge », ce message du protocole FIDO est par ailleurs aussi utilisé par le premier processeur pour déterminer l'instruction de commande qui permet d'induire des caractéristiques visibles dans des images acquises par le capteur d'acquisition (par exemple une variation d'éclairage).

Dans un mode de réalisation particulier du système d'acquisition selon l'invention, ladite instruction de commande comprend au moins une instruction de commande du dispositif d'éclairage selon une séquence d'éclairage correspondant à ladite information codée contenue dans le message, ledit au moins un premier processeur étant programmé pour commander le dispositif d'éclairage en vue d'obtenir ladite séquence d'éclairage pendant l'acquisition de ladite succession d'images par le capteur d'acquisition, et ledit second processeur étant programmé pour détecter une tentative de fraude, en vérifiant si lesdites images transmises de la succession d'images comportent des caractéristiques représentatives de ladite séquence d'éclairage correspondant à ladite information codée contenue dans ledit message.

Ce mode permet, en utilisant le dispositif d'éclairage du terminal de générer les caractéristiques représentatives de l'information codée par simple variation de l'éclairage.

Dans un autre mode de réalisation particulier du système d'acquisition selon l'invention (éventuellement-complémentaire du mode précédent), le terminal comprend en outre au moins une interface de communication avec un utilisateur du système, ledit au moins un premier processeur étant programmé pour commander l'interface pour délivrer à l'utilisateur une instruction de réalisation d'actions pendant l'acquisition de ladite succession d'images par le capteur d'acquisition, cette instruction étant fonction de ladite instruction de commande, et ledit second processeur étant programmé pour détecter une tentative de fraude, en vérifiant si lesdites images transmises de la succession d'images comportent des caractéristiques représentatives desdites actions éventuellement effectuées par l'utilisateur en réponse à ladite instruction de réalisation d'actions.

Dans ce mode de réalisation, les instructions de réalisation d'action sont préférentiellement des mouvements particuliers (par exemple tourner la tête) que l'on doit retrouver dans les images acquises.

Ici, en plus de vérifier si l'utilisateur est bien présent ou non devant le terminal pendant l'acquisition des images, on vérifie s'il comprend bien les instructions et s'il les exécute correctement ce qui rajoute un test de sécurité.

Selon un autre aspect, l'invention concerne un procédé de détection de tentative de fraude d'un système d'acquisition d'informations biométriques comportant un équipement informatique distant et un terminal de communication qui comprend un capteur d'acquisition d'images biométriques et un dispositif d'éclairage et qui est adapté à communiquer avec l'équipement distant via un réseau de communication, le procédé étant caractérisé en ce qu'il comprend les étapes suivantes :
- échange via le réseau et entre l'équipement distant et le terminal d'un message comprenant une information codée,
- génération, au niveau du terminal de communication, d'une instruction de commande fonction de ladite information codée, cette instruction de commande étant telle que lorsqu'elle est exécutée alors qu'une succession d'images est acquise par le capteur d'acquisition, elle induise dans des images de cette succession d'images, des caractéristiques représentatives de l'information codée, puis
- acquisition par le capteur d'acquisition d'une succession d'images alors que ladite instruction de commande est exécutée,
- transmission d'au moins une partie des images acquises par le capteur d'acquisition (à l'équipement distant),
- vérification par l'équipement distant que les images transmises comprennent des caractéristiques représentatives de ladite information codée contenue dans le message et, en fonction de cette vérification, émission d'un signal de fraude en cas d'absence de ces caractéristiques.

Ce signal peut indiquer qu'il y a eu détection de fraude ou au contraire qu'il n'y a pas eu de fraude détectée.

Selon un autre mode de réalisation particulier du procédé selon l'invention, ladite instruction de commande comprend au moins une instruction de commande du dispositif d'éclairage selon une séquence d'éclairage correspondant à ladite information codée contenue dans le message et ledit premier processeur commande le dispositif d'éclairage en vue d'obtenir ladite séquence d'éclairage pendant l'acquisition de ladite succession d'images par le capteur d'acquisition, et ledit second processeur détecte une tentative de fraude, en vérifiant si lesdites images transmises de la succession d'images comportent des caractéristiques représentatives de ladite séquence d'éclairage correspondant à ladite information codée contenue dans ledit message.

Selon un autre mode de réalisation particulier du procédé selon l'invention (éventuellement complémentaire du mode précédent) :
- le terminal comprend au moins une interface de communication avec un utilisateur du système ;
- ledit au moins un premier processeur (P1) commande cette interface pour délivrer à l'utilisateur une instruction de réalisation d'actions (typiquement une instruction de réalisation d'un mouvement) pendant l'acquisition de ladite succession d'images par le capteur d'acquisition, cette instruction étant fonction de ladite instruction de commande, et
- ledit second processeur détecte une tentative de fraude, en vérifiant si lesdites images transmises de la succession d'images comportent des caractéristiques représentatives desdites actions éventuellement effectuées par l'utilisateur en réponse à ladite instruction de réalisation d'actions.

Ici, on demande à l'utilisateur d'être actif pour indiquer qu'il est bien présent face au terminal ce qui augmente la sécurité antifraude.

Selon un autre mode de réalisation particulier du procédé selon l'invention (éventuellement complémentaire de l'un au moins des modes précédents), ladite instruction de commande comprend au moins une commande de variation d'au moins un paramètre d'acquisition.

Ici, on ne joue pas sur la séquence d'éclairage ou l'action réalisée par l'utilisateur, mais on joue sur les paramètres de l'acquisition d'image, c'est-à-dire les paramètres du capteur ou de la chaîne d'acquisition/traitement d'image qui permet de délivrer la succession d'image après captation par le capteur.

Selon un autre mode de réalisation complémentaire du précédent, ledit au moins un paramètre d'acquisition est choisi dans le groupe de paramètres comprenant un paramètre de couleur d'image acquise un effet vidéo dans l'image transmise, une variation de distance de mise au point du capteur d'acquisition d'image entre plusieurs images transmises, une variation de sensibilité du capteur entre plusieurs images transmises, une variation de couleurs dans une image ou entre plusieurs images transmises, une variation de position de point de focus entre plusieurs images transmises, une variation de fréquence d'acquisition entre plusieurs images transmises, une variation de taille d'images entre plusieurs images transmises, une variation de résolution d'images entre plusieurs images transmises.

### BREVE DESCRIPTION DES DESSINS

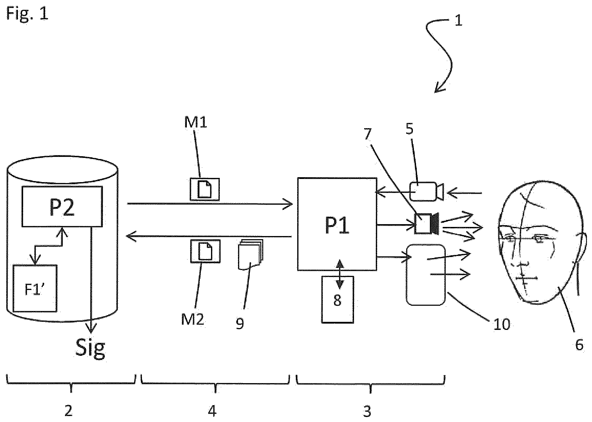

D'autres caractéristiques et avantages de l'invention ressortiront clairement de la description qui en est faite ci-après, à titre indicatif et nullement limitatif, en référence à la figure 1 qui présente un mode de réalisation particulier du système selon l'invention.

### DESCRIPTION DETAILLEE DE L'INVENTION

Comme indiqué précédemment, l'invention concerne essentiellement un système d'acquisition d'informations biométriques 1 comportant :
- un équipement électronique distant de confiance 2, en l'occurrence un serveur ; et
- un terminal électronique de communication 3.

L'équipement 2 et le terminal sont adaptés à communiquer entre eux via un réseau de communication 4 auquel ils sont reliés fonctionnellement.

Le terminal de communication 3 est par exemple un téléphone intelligent, dit smartphone, une tablette numérique ou un ordinateur portable, ou tout autre terminal équipé de moyens de liaison avec le réseau de communication. L'équipement distant 2 est aussi doté de moyens de liaison avec ce réseau de communication pour pouvoir échanger des messages avec le terminal via le réseau.

Le terminal 3 comporte :
- au moins un capteur électronique d'acquisition d'images 5 pour acquérir des images biométriques d'individu 6 ;
- au moins un dispositif d'éclairage 7 pour l'acquisition des images biométriques (ce dispositif d'éclairage est disposé pour pouvoir éclairer un individu se trouvant dans le champ optique du capteur) ; et
- au moins un premier processeur P1 programmé pour déterminer une instruction de commande.

Ci-après cette instruction de commande est essentiellement une instruction de commande du dispositif d'éclairage selon une séquence d'éclairage correspondant à une information codée contenue dans un message M1, M2.

Toutefois, comme indiqué ci-avant, cette instruction de commande, générée à l'aide de l'information codée, peut aussi être :
- une instruction de commande délivrée à une interface de communication du terminal (par exemple un écran ou un hautparleur) qui indique à l'utilisateur d'effectuer des actions particulières comme prendre une pause particulière ou effectuer des mouvements visibles sur les images acquises ; et/ou
- une instruction de commande de variation d'au moins un paramètre d'acquisition du capteur d'acquisition et/ou de sa chaîne de traitement d'image.

Dans tous ces cas, le but de l'instruction de commande est de générer lorsqu'elle est exécutée, dans une succession d'images acquises, des caractéristiques représentatives de l'information codée qui est utilisée pour générer cette instruction de commande. L'équipement distant 2 et le terminal 3 sont adaptés à se transmettre des messages M1 et/ou M2 via le réseau 4.

Le premier processeur est aussi programmé pour commander le dispositif d'éclairage 7 en vue d'obtenir la séquence d'éclairage pendant l'acquisition d'une succession d'images 9 par le capteur d'acquisition 5.

Chaque message M1, M2 contient des informations codées qui lui sont propres. L'information codée est telle que si on essaie de l'exécuter avec le premier processeur, aucune instruction de commande du dispositif d'éclairage n'est générée par le premier processeur.

Le terminal 3 comporte une mémoire 8 dans laquelle est stocké un algorithme de programmation du premier processeur P1.

Cette programmation du premier processeur P1 est tel que le premier processeur utilise l'information codée contenue dans le message M1 ou M2 comme une variable lui permettant selon un code prédéfini de déterminer une instruction de commande pour mettre en œuvre une séquence d'éclairage correspondante à cette information codée.

Une fois cette instruction générée, le processeur P1 commande le capteur d'acquisition 5 et le dispositif d'éclairage 7 pour générer la séquence d'éclairage pendant que le capteur d'acquisition 5 réalise l'acquisition d'une succession d'images d'une zone éclairée par le dispositif d'éclairage.

Le terminal 3 est agencé pour transmettre à l'équipement distant 2 certaines au moins des images 9 de ladite succession d'images à l'équipement distant 2 via le réseau 4.

L'équipement distant 2 comporte un second processeur P2 programmé pour détecter une tentative de fraude en vérifiant si les images 9 de la succession d'image qu'il a reçues comportent ou non des caractéristiques représentatives de ladite séquence d'éclairage qui correspond à l'information codée contenue dans le message M1 ou M2.

Pour cela, ce second processeur P2 exécute un algorithme complémentaire de l'algorithme exécuté au niveau du terminal 3, à l'aide de la même information codée contenue dans ledit message.

Cette information codée est encore une fois utilisée comme une variable et elle n'est donc en rien une instruction de commande induisant une caractéristique dans les images acquises. Un tiers aura du mal, d'une part à identifier quelle information codée du message est utilisée pour induire une caractéristique dans la séquence d'images et il aura aussi du mal à identifier quelle est la caractéristique de la séquence d'images qui est utilisée pour détecter une tentative de fraude.

La programmation du second processeur P2 est telle qu'elle permet au processeur P2 de déterminer des caractéristiques représentatives de la séquence d'éclairage correspondant à l'information codée et qu'il devrait retrouver dans les images 9 acquises pendant l'exécution de la séquence d'éclairage.

Ce second processeur P2 est également programmé pour détecter une tentative de fraude en vérifiant si les images 9 de la succession d'images comportent bien ces caractéristiques représentatives de la séquence d'éclairage.

En fonction du résultat de cette détection de présence des caractéristiques, le second processeur P2 génère un signal Sig représentatif d'une détection de fraude.

Selon le cas, ce signal Sig peut prendre plusieurs valeurs pour :
- indiquer qu'il y a détection d'une tentative de fraude car les caractéristiques ne sont pas présentes sur certaines au moins des images acquises ; et/ou
- indiquer qu'il n'y a pas eu de détection de tentative de fraude car les caractéristiques sont bien présentes dans certaines au moins des images acquises ;
- indiquer un niveau de potentialité de fraude, ce niveau étant fonction d'un nombre de caractéristiques représentatives identifiées dans les images 9.

En éclairant un individu réel, on obtient des zones du visage de l'individu qui sont plus ou moins éclairées ou plus ou moins ombrées et on obtient une variation de l'éclairage observable sur plusieurs images de la séquence d'images. Connaissant la variation de condition donnée d'éclairage dans le temps ou du moins une variation attendue de la condition d'éclairage, on sait déterminer les variations de caractéristiques visuelles qui sont normalement induites sur l'individu par cette variation d'éclairage et le processeur P2 calcule dès lors les caractéristiques représentatives de la séquence d'éclairage de l'individu qui devrait trouver dans les images.

La programmation du second processeur P2 est telle qu'il détermine pour chaque image les caractéristiques représentatives qu'il devrait retrouver dans cette image 9 acquise à un instant donné de la séquence d'éclairage.

A cette fin, chaque image acquise peut être associée à une donnée, par exemple une heure, qui permet de déterminer à quel instant de la séquence d'éclairage correspond cette image donnée.

Parmi lesdites caractéristiques représentatives de la séquence d'éclairage se trouve au moins une première caractéristique choisie parmi une localisation attendue d'au moins une zone d'ombre dans l'image donnée, une forme attendue de zone d'ombre dans l'image donnée, une intensité lumineuse attendue dans l'image donnée, un gradient d'intensité lumineuse attendu dans l'image donnée, une localisation attendue d'au moins une zone d'éclairage dans l'image donnée, une forme attendue de zone d'éclairage dans l'image donnée, une couleur attendue dans l'image donnée.

Par la localisation dans l'image, on peut entendre une localisation en zone haute, basse, centrale ou latérale de l'image donnée.

La séquence d'éclairage correspondant à l'information codée peut induire une variation d'intensité lumineuse projetée et/ou une variation de couleur projetée et/ou une variation d'orientation de flux de lumière projeté et/ou une séquence particulière de flashs successifs dont le nombre, les durées respectives sont fonction de l'information codée.

Parmi les caractéristiques représentatives de la séquence d'éclairage se trouve préférentiellement une évolution de ladite au moins une première caractéristique entre plusieurs images successives de ladite succession d'images acquises. Ici, on cherche à vérifier si l'on a ou pas une évolution cohérente de la première caractéristique dans la succession d'images.

On peut ainsi rechercher une variation d'intensité lumineuse ou de couleur ou d'ombrage sur plusieurs images ou un déplacement d'une de ces caractéristiques entre des images successives.

Préférentiellement, l'information codée est choisies parmi un numéro d'ordre du message, un numéro de transaction, une date d'émission du message, une heure d'émission du message, le résultat d'un traitement arithmétique ou statistique de plusieurs composantes contenues dans le message M1, un enchaînement donné d'instructions contenues dans le message, une série de chiffres contenus dans le message, un code d'authentification de message.

Le choix du type d'information codée pour la mise en œuvre de l'invention doit répondre à l'objectif d'obtenir avec la même information codée du message, une cohérence entre les images acquises d'un individu réellement présent face au capteur d'acquisition 5 durant la variation des conditions d'éclairage et les caractéristiques représentatives identifiées dans les images au niveau de l'équipement distant.

Dans un mode de réalisation préférentiel, l'instruction de commande du dispositif d'éclairage comporte au moins une commande choisie parmi une commande de variation d'intensité d'éclairage, une commande de variation de couleur d'éclairage, une commande de variation de fréquence d'éclairage, une commande de variation de distance de mise au point du capteur d'acquisition d'image (dans le cas où le capteur d'image comporte une optique comportant des moyens mécaniques pour faire varier la distance de mise au point optique), une commande de variation de la direction d'éclairage par rapport à l'individu.

Par variation, on entend une évolution dans le temps.

Selon un mode complémentaire de réalisation, l'instruction de commande du dispositif d'éclairage peut être associée à une instruction pour un utilisateur du système, lui demandant de réaliser des mouvements particuliers alors qu'il se trouve devant le capteur d'acquisition d'images et qu'il est éclairé suivant ladite séquence d'éclairage par ledit dispositif d'éclairage.

Le second processeur est alors programmé pour détecter la tentative de fraude, en vérifiant que les images de la succession d'images comportent des caractéristiques représentatives de l'exécution par l'utilisateur desdits mouvements particuliers.

L'instruction pour l'utilisateur lui demandant de réaliser des mouvements particuliers peut être déterminée en fonction de la séquence d'éclairage préalablement déterminée ou directement en fonction de certaines autres informations codées contenues dans ledit message ou un autre des messages transmis via le réseau. Il est à noter que l'instruction de commande du dispositif d'éclairage peut être choisie dans une liste d'instructions prédéterminées. Les instructions de réalisation de mouvements particuliers peuvent aussi être choisies dans une liste prédéterminée. Ces choix peuvent être effectués à partir de la même information codée ou à partir d'informations codées différentes appartenant ou non au même message M1, M2.

La liste de mouvements particuliers prédéterminée peut comprendre cligner des yeux, réaliser un mouvement de tête, ouvrir la bouche, s'approcher ou s'éloigner du capteur d'acquisition, déplacer le terminal dans un sens donné par rapport à l'utilisateur.

Ce comportement actif de l'utilisateur, permet de vérifier d'une part que l'utilisateur est bien présent face au capteur et d'autre part qu'il comprend bien les instructions qui lui sont données.

L'acquisition d'une succession d'images alors que l'utilisateur réalise des mouvements particuliers permet d'avoir une variation des conditions d'éclairage induites par ses mouvements et permet de s'assurer que l'on a bien affaire à un utilisateur réel.

Préférentiellement, le second processeur P2 est programmé pour générer un signal représentatif d'une suspicion de fraude et transmette ce signal audit terminal 3.

Le processeur P1 du terminal 3 peut, à réception du signal Sig, et en suivant des règles préprogrammées, déclencher des actions, comme l'autorisation ou l'interdiction d'accès à des fonctions exécutées au niveau du terminal 3.

Préférentiellement l'équipement distant 2 comporte aussi un module F1' de reconnaissance de caractéristiques biométriques contenues dans certaines au moins des images acquises par ledit au moins un capteur d'acquisition 5.

Ce module F1' peut ainsi valider une reconnaissance biométrique de l'individu imagé.

Si l'utilisateur imagé est bien réel et s'il est identifié par ses données biométriques apparentes sur les images, il peut alors être autorisé à effectuer des opérations relevant de droits d'accès associés à son identité.

Il est à noter que le terminal 3 peut aussi comporter un module de reconnaissance de caractéristiques biométriques dans les images acquises. Ainsi, il est possible d'avoir une reconnaissance d'identité directement au niveau du terminal 3, sans passer par une communication réseau. Si à l'issue de l'identification, le second processeur détermine qu'il y a tentative de fraude pour un utilisateur donné, il peut alors émettre une alerte pour cet utilisateur.

Si a contrario, il n'y a pas de détection de fraude, alors l'utilisateur identifié et réellement présent devant le capteur d'acquisition peut être autorisé à accéder à des fonctions associées à son profil utilisateur.
Préférentiellement, le dispositif d'éclairage est constitué par un moyen de rétroéclairage d'un écran en couleur 10 et/ou au moins une diode électroluminescente pouvant servir de flash.

L'invention n'est pas limitée à ce qui vient d'être décrit et en particulier, bien que l'on ait décrit l'usage d'une information codée contenue dans un message M1 ou M2 pour générer l'instruction de commande du dispositif d'éclairage, il est aussi possible de générer cette instructions à l'aide d'informations codées supplémentaires contenues dans un ou plusieurs autres messages transmis entre l'équipement distant 2 et le terminal 3.

Le premier processeur P1 peut être agencé pour générer l'instruction de commande non seulement en fonction de la ou des informations codées du ou des messages M1, M2, mais aussi en fonction d'informations spécifiques propres au terminal qui sont par ailleurs mémorisées au niveau de l'équipement distant 2. Ces informations spécifiques peuvent être par exemple un numéro de série du terminal ou une version de système d'exploitation ou toute autre information.

## Revendications

1. Système d'acquisition d'informations biométriques (1) comportant un équipement distant (2) et un terminal de communication (3) qui sont adaptés à communiquer entre eux via un réseau de communication (4), le terminal (3) comportant :
- au moins un capteur d'acquisition d'images biométriques (5) ;
- au moins un dispositif d'éclairage (7) pour l'acquisition des images biométriques ;
- au moins un premier processeur (P1) programmé pour générer une instruction de commande en fonction d'un code préétabli connu au niveau du terminal et au niveau de l'équipement distant et d'une information codée autre qu'une instruction de commande, ladite information codée étant contenue dans un message (M1, M2) échangé entre le terminal de communication (3) et l'équipement distant (2), cette instruction de commande étant adaptée pour être exécutée alors qu'une succession d'images est acquise par le capteur d'acquisition (5) et pour induire dans des images de la succession d'images acquises par le capteur d'acquisition (5), des caractéristiques représentatives de l'information codée contenue dans ledit message, le processeur étant programmé pour commander l'acquisition d'une succession d'images par le capteur d'acquisition (5) alors que ladite instruction de commande est exécutée et pour transmettre au moins une partie des images (9) de ladite succession d'images audit équipement distant ;
et ledit équipement distant comportant un second processeur (P2) programmé pour détecter une tentative de fraude, en vérifiant si les images (9) transmises de la succession d'images comportent des caractéristiques représentatives de ladite information codée contenue dans ledit message (M2) échangé entre le terminal de communication (3) et l'équipement distant (2).

2. Système d'acquisition selon la revendication 1, dans lequel ladite instruction de commande comprend au moins une instruction de commande du dispositif d'éclairage selon une séquence d'éclairage correspondant à ladite information codée contenue dans le message (M1, M2), ledit au moins un premier processeur (P1) étant programmé pour commander le dispositif d'éclairage en vue d'obtenir ladite séquence d'éclairage pendant l'acquisition de ladite succession d'images par le capteur d'acquisition, et ledit second processeur (P2) étant programmé pour détecter une tentative de fraude, en vérifiant si lesdites images (9) transmises de la succession d'images comportent des caractéristiques représentatives de ladite séquence d'éclairage correspondant à ladite information codée contenue dans ledit message.

3. Système d'acquisition selon la revendication 1, dans lequel le terminal comprend en outre au moins une interface de communication avec un utilisateur du système, ledit au moins un premier processeur (P1) étant programmé pour commander l'interface pour délivrer à l'utilisateur une instruction de réalisation d'actions pendant l'acquisition de ladite succession d'images par le capteur d'acquisition, cette instruction étant fonction de ladite instruction de commande, et ledit second processeur (P2) étant programmé pour détecter une tentative de fraude, en vérifiant si lesdites images (9) transmises de la succession d'images comportent des caractéristiques représentatives desdites actions éventuellement effectuées par l'utilisateur en réponse à ladite instruction de réalisation d'actions.

4. Système d'acquisition selon l'une quelconque des revendications 1 à 3, dans lequel l'équipement distant (2) est agencé pour transmettre ledit message (M1, M2) au terminal de communication (3).

5. Système d'acquisition selon l'une quelconque des revendications 1 à 3, dans lequel le terminal de communication (3) est agencé pour transmettre ledit message (M1, M2) à l'équipement distant (2).

6. Système d'acquisition selon la revendication 2, dans lequel parmi lesdites caractéristiques représentatives de la séquence d'éclairage se trouve au moins une première caractéristique choisie parmi une localisation attendue d'au moins une zone d'ombre dans l'image donnée, une forme attendue de zone d'ombre dans l'image donnée, une intensité lumineuse attendue dans l'image donnée, un gradient d'intensité lumineuse attendu dans l'image donnée, une localisation attendue d'au moins une zone d'éclairage dans l'image donnée, une forme attendue de zone d'éclairage dans l'image donnée, une couleur attendue dans l'image donnée.

7. Système d'acquisition selon l'une quelconque des revendications 2 ou 6, dans lequel parmi lesdites caractéristiques représentatives de ladite séquence d'éclairage se trouve une évolution de ladite au moins une première caractéristique entre plusieurs images successives de ladite succession d'images acquises.

8. Système d'acquisition selon l'une quelconque des revendications 1 à 7, dans lequel l'information codée est choisie parmi un numéro d'ordre du message, un numéro de transaction, une date d'émission du message, une heure d'émission du message, le résultat d'un traitement arithmétique ou statistique de plusieurs composantes contenues dans le message, une série de chiffres contenus dans le message, un code d'authentification de message.

9. Système selon l'une quelconque des revendications 2 ou 6 ou 7, dans lequel l'instruction de commande du dispositif d'éclairage comporte au moins une commande choisie parmi une commande de variation d'intensité d'éclairage, une commande de variation de couleur d'éclairage, une commande de variation de fréquence d'éclairage, une commande de variation de distance de mise au point du capteur d'acquisition d'image, une commande de variation de la direction d'éclairage par rapport à l'individu.

10. Système selon l'une quelconque des revendications 2 ou 6 ou 7 ou 9, dans lequel ladite instruction de commande du dispositif d'éclairage peut être associée à une instruction pour un utilisateur du système, lui demandant de réaliser des mouvements particuliers alors qu'il se trouve devant le capteur d'acquisition d'images et qu'il est éclairé suivant ladite séquence d'éclairage par ledit dispositif d'éclairage, le second processeur étant programmé pour détecter la tentative de fraude, en vérifiant que les images de la succession d'images comportent des caractéristiques représentatives de l'exécution par l'utilisateur desdits mouvements particuliers.

11. Système selon l'une quelconque des revendications 1 à 10, dans lequel le second processeur est programmé pour générer un signal représentatif d'une suspicion de fraude et transmette ce signal audit terminal.

12. Système selon l'une quelconque des revendications 1 à 11, dans lequel le dispositif d'éclairage est l'un au moins des dispositifs d'éclairage parmi lesquels se trouvent un moyen de rétroéclairage d'un écran en couleur ou au moins une diode électroluminescente.

13. Procédé de détection de tentative de fraude d'un système d'acquisition d'informations biométriques (1) comportant un équipement informatique distant (2) et un terminal de communication (3) qui comprend un capteur d'acquisition d'images biométriques, au moins un premier processeur (P1) et un dispositif d'éclairage et qui est adapté à communiquer avec l'équipement distant via un réseau de communication (4), le procédé comprenant les étapes suivantes :
- échange, via le réseau et entre l'équipement distant (2) et le terminal (3), d'un message (M1, M2) comprenant une information codée autre qu'une instruction de commande,
- génération, par ledit au moins un premier processeur (P1), au niveau du terminal de communication, d'une instruction de commande fonction d'un code préétabli connu au niveau du terminal et au niveau de l'équipement distant et en fonction de ladite information codée contenue dans le message échangé (M1, M2), cette instruction de commande étant adaptée pour être exécutée alors qu'une succession d'images est acquise par le capteur d'acquisition et pour induire dans des images de cette succession d'images, des caractéristiques représentatives de l'information codée, puis
- acquisition par le capteur d'acquisition d'une succession d'images alors que ladite instruction de commande est exécutée,
- transmission à l'équipement distant d'au moins une partie des images acquises par le capteur d'acquisition, et
- vérification par l'équipement distant que les images transmises comprennent des caractéristiques représentatives de ladite information codée contenue dans le message et, en fonction de cette vérification, émission d'un signal de fraude en cas d'absence de ces caractéristiques.

14. Procédé de détection de tentative de fraude selon la revendication 13, dans lequel ladite instruction de commande comprend au moins une instruction de commande du dispositif d'éclairage selon une séquence d'éclairage correspondant à ladite information codée contenue dans le message (M1, M2) et dans lequel ledit premier processeur (P1) commande le dispositif d'éclairage en vue d'obtenir ladite séquence d'éclairage pendant l'acquisition de ladite succession d'images par le capteur d'acquisition, et dans lequel ledit second processeur (P2) détecte une tentative de fraude, en vérifiant si lesdites images (9) transmises de la succession d'images comportent des caractéristiques représentatives de ladite séquence d'éclairage correspondant à ladite information codée contenue dans ledit message.

15. Procédé de détection de tentative de fraude selon l'une quelconque des revendications 13 ou 14, dans lequel :
- le terminal comprend au moins une interface de communication avec un utilisateur du système ;
- ledit au moins un premier processeur (P1) commande cette interface pour délivrer à l'utilisateur une instruction de réalisation d'actions pendant l'acquisition de ladite succession d'images par le capteur d'acquisition, cette instruction étant fonction de ladite instruction de commande, et
- ledit second processeur (P2) détecte une tentative de fraude, en vérifiant si lesdites images (9) transmises de la succession d'images comportent des caractéristiques représentatives desdites actions éventuellement effectuées par l'utilisateur en réponse à ladite instruction de réalisation d'actions.

16. Procédé de détection de tentative de fraude selon l'une quelconque des revendications 13 à 15, dans lequel ladite instruction de commande comprend au moins une commande de variation d'au moins un paramètre d'acquisition.

17. Procédé de détection de tentative de fraude selon la revendication 16, dans lequel ledit au moins un paramètre d'acquisition est choisi dans le groupe de paramètres comprenant un paramètre de couleur d'image acquise, un effet vidéo dans l'image transmise, une variation de distance de mise au point du capteur d'acquisition d'image entre plusieurs images transmises, une variation de sensibilité du capteur entre plusieurs images transmises, une variation de couleurs dans une image ou entre plusieurs images transmises, une variation de position de point de focus entre plusieurs images transmises, une variation de fréquence d'acquisition entre plusieurs images transmises, une variation de taille d'images entre plusieurs images transmises, une variation de résolution d'images entre plusieurs images transmises.

## Patentansprüche

1. System zur Erfassung biometrischer Informationen (1), das ein Remote-Gerät (2) und ein Kommunikationsendgerät (3) aufweist, die derart eingerichtet sind, dass sie über ein Kommunikationsnetz (4) miteinander kommunizieren, wobei das Endgerät (3) Folgendes aufweist:
- mindestens einen Sensor zur Erfassung biometrischer Bilder (5);
- mindestens eine Beleuchtungseinrichtung (7) für die Erfassung biometrischer Bilder;
- mindestens einen ersten Prozessor (P1),
der dazu programmiert ist, eine Steueranweisung zu erzeugen, und zwar in Abhängigkeit von einem vorher festgelegten Code, der dem Endgerät und dem Remote-Gerät bekannt ist, und von einer codierten Information, die von einer Steueranweisung verschieden ist, wobei die codierte Information in einer Nachricht (M1, M2) enthalten ist, die zwischen dem Kommunikationsendgerät (3) und dem Remote-Gerät (2) ausgetauscht wird, wobei diese Steueranweisung derart ausgelegt ist, dass sie ausgeführt wird, während mittels des Erfassungssensors (5) eine Bildfolge erfasst wird, und dass sie in Bildern der Folge von mittels des Erfassungssensors (5) erfassten Bildern Merkmale induziert, die repräsentativ für die codierte Information sind, die in der Nachricht enthalten ist, wobei der Prozessor dazu programmiert ist, die Erfassung einer Bildfolge mittels des Erfassungssensors (5) zu steuern, während die Steueranweisung ausgeführt wird, und mindestens einen Teil der Bilder (9) der Bildfolge an das Remote-Gerät zu übertragen;
und wobei das Remote-Gerät einen zweiten Prozessor (P2) aufweist, der derart programmiert ist, dass er einen Betrugsversuch erkennt, indem er überprüft, ob die übertragenen Bilder (9) der Bildfolge Merkmale aufweisen, die repräsentativ für die codierte Information sind, die in der zwischen dem Kommunikationsendgerät (3) und dem Remote-Gerät (2) ausgetauschten Nachricht (M2) enthalten ist.

2. Erfassungssystem nach Anspruch 1, bei dem die Steueranweisung mindestens eine Anweisung zur Steuerung der Beleuchtungseinrichtung gemäß einer Beleuchtungssequenz umfasst, die der codierten Information entspricht, die in der Nachricht (M1, M2) enthalten ist, wobei der mindestens eine erste Prozessor (P1) dazu programmiert ist, die Beleuchtungseinrichtung mit dem Ziel zu steuern, die Beleuchtungssequenz während der Erfassung der Bildfolge mittels des Erfassungssensors zu erhalten, und wobei der zweite Prozessor (P2) dazu programmiert ist, einen Betrugsversuch zu erkennen, indem er überprüft, ob die übertragenen Bilder (9) der Bildfolge Merkmale aufweisen, die repräsentativ für die Beleuchtungssequenz sind, die der codierten Information entspricht, die in der Nachricht enthalten ist.

3. Erfassungssystem nach Anspruch 1, bei dem das Endgerät außerdem mindestens eine Schnittstelle zur Kommunikation mit einem Benutzer des Systems umfasst, wobei der mindestens eine erste Prozessor (P1) dazu programmiert ist, die Schnittstelle derart zu steuern, dass sie während der Erfassung der Bildfolge mittels des Erfassungssensors dem Benutzer eine Anweisung zur Durchführung von Handlungen erteilt, wobei diese Anweisung von der Steueranweisung abhängig ist, und wobei der zweite Prozessor (P2) dazu programmiert ist, einen Betrugsversuch zu erkennen, indem er überprüft, ob die übertragenen Bilder (9) der Bildfolge Merkmale aufweisen, die repräsentativ für die Handlungen sind, die gegebenenfalls von dem Benutzer als Reaktion auf die Anweisung zur Durchführung von Handlungen vorgenommen wurden.

4. Erfassungssystem nach einem der Ansprüche 1 bis 3, bei dem das Remote-Gerät (2) derart eingerichtet ist, dass es die Nachricht (M1, M2) an das Kommunikationsendgerät (3) überträgt.

5. Erfassungssystem nach einem der Ansprüche 1 bis 3, bei dem das Kommunikationsendgerät (3) derart eingerichtet ist, dass es die Nachricht (M1, M2) an das Remote-Gerät (2) überträgt.

6. Erfassungssystem nach Anspruch 2, bei dem es unter den Merkmalen, die repräsentativ für die Beleuchtungssequenz sind, mindestens ein erstes Merkmal gibt, das aus einer erwarteten Position mindestens einer Dunkelzone in dem gegebenen Bild, einer erwarteten Form der Dunkelzone in dem gegebenen Bild, einer erwarteten Helligkeit in dem gegebenen Bild, einem erwarteten Helligkeitsgradienten in dem gegebenen Bild, einer erwarteten Position mindestens einer Ausleuchtungszone in dem gegebenen Bild, einer erwarteten Form der Ausleuchtungszone in dem gegebenen Bild, einer erwarteten Farbe in dem gegebenen Bild gewählt ist.

7. Erfassungssystem nach einem der Ansprüche 2 oder 6, bei dem von den Merkmalen, die repräsentativ für die Beleuchtungssequenz sind, mindestens ein erstes Merkmal zwischen mehreren aufeinanderfolgenden Bildern der Folge erfasster Bilder eine Veränderung erfährt.

8. Erfassungssystem nach einem der Ansprüche 1 bis 7, bei dem die codierte Information aus einer laufenden Nummer der Nachricht, einer Transaktionsnummer, einem Sendedatum der Nachricht, einer Sendezeit der Nachricht, dem Ergebnis einer arithmetischen oder statistischen Verarbeitung mehrerer in der Nachricht enthaltener Komponenten, einer Reihe von in der Nachricht enthaltenen Ziffern, einem Authentifizierungscode der Nachricht gewählt ist.

9. System nach einem der Ansprüche 2 oder 6 oder 7, bei dem die Steueranweisung der Beleuchtungseinrichtung mindestens einen Befehl aufweist, der aus einem Befehl zum Variieren der Beleuchtungsstärke, einem Befehl zum Variieren der Beleuchtungsfarbe, einem Befehl zum Variieren der Beleuchtungsfrequenz, einem Befehl zum Variieren der Fokussierungsentfernung des Bilderfassungssensors, einem Befehl zum Variieren der Beleuchtungsrichtung in Bezug auf das Individuum gewählt ist.

10. System nach einem der Ansprüche 2 oder 6 oder 7 oder 9, bei dem die Steueranweisung für die Beleuchtungseinrichtung mit einer Anweisung an einen Benutzer des Systems verbunden sein kann, in der er aufgefordert wird, bestimmte Bewegungen auszuführen, während er sich vor dem Bilderfassungssensor befindet und entsprechend der Beleuchtungssequenz von der Beleuchtungseinrichtung beleuchtet wird, wobei der zweite Prozessor dazu programmiert ist, den Betrugsversuch zu erkennen, indem er überprüft, dass die Bilder der Bildfolge Merkmale aufweisen, die repräsentativ für die Ausführung der bestimmten Bewegungen durch den Benutzer sind.

11. System nach einem der Ansprüche 1 bis 10, bei dem der zweite Prozessor dazu programmiert ist, ein Signal zu erzeugen, das repräsentativ für einen Betrugsverdacht ist, und dieses Signal an das Endgerät zu übertragen.

12. System nach einem der Ansprüche 1 bis 11, bei dem die Beleuchtungseinrichtung mindestens eine von Beleuchtungseinrichtungen ist, unter denen es ein Mittel zur Hintergrundbeleuchtung eines Farbbildschirms oder mindestens eine Leuchtdiode gibt.

13. Verfahren zur Betrugsversuchserkennung bei einem System zur Erfassung biometrischer Informationen (1), aufweisend ein Remote-Datenverarbeitungsgerät (2) und ein Kommunikationsendgerät (3), das einen Sensor zur Erfassung biometrischer Bilder, mindestens einen ersten Prozessor (P1) und eine Beleuchtungseinrichtung umfasst und das derart eingerichtet ist, dass es mit dem Remote-Gerät über ein Kommunikationsnetz (4) kommuniziert, wobei das Verfahren die folgenden Schritte umfasst:
- Austauschen einer Nachricht (M1, M2), die eine codierte Information umfasst, die von einer Steueranweisung verschieden ist, über das Netz und zwischen dem Remote-Gerät (2) und dem Endgerät (3),
- Erzeugen einer Steueranweisung in Abhängigkeit von einem vorher festgelegten Code, der dem Endgerät und dem Remote-Gerät bekannt ist, und in Abhängigkeit von der codierten Information, die in der ausgetauschten Nachricht (M1, M2) enthalten ist, in dem Kommunikationsendgerät mittels des mindestens einen ersten Prozessors (P1), wobei diese Steueranweisung derart ausgelegt ist, dass sie ausgeführt wird, während mittels des Erfassungssensors eine Bildfolge erfasst wird, und dass sie in den Bildern dieser Bildfolge Merkmale induziert, die repräsentativ für die codierte Information sind, anschließend
- Erfassen einer Bildfolge mittels des Bilderfassungssensors, während die Steueranweisung ausgeführt wird,
- Übertragen mindestens eines Teils der von dem Erfassungssensor erfassten Bilder an das Remote-Gerät und
- Überprüfen, durch das Remote-Gerät, dass die übertragenen Bilder Merkmale umfassen, die repräsentativ für die in der Nachricht enthaltene codierte Information ist, und in Abhängigkeit von dieser Überprüfung Senden eines Betrugssignals bei einem Fehlen dieser Merkmale.

14. Verfahren zur Betrugsversuchserkennung nach Anspruch 13, bei dem die Steueranweisung mindestens eine Anweisung zur Steuerung der Beleuchtungseinrichtung gemäß einer Beleuchtungssequenz umfasst, die der codierten Information entspricht, die in der Nachricht (M1, M2) enthalten ist, und bei dem der erste Prozessor (P1) die Beleuchtungseinrichtung mit dem Ziel steuert, die Beleuchtungssequenz während der Erfassung der Bildfolge mittels des Erfassungssensors zu erhalten, und bei dem der zweite Prozessor (P2) einen Betrugsversuch erkennt, indem er überprüft, ob die übertragenen Bilder (9) der Bildfolge Merkmale aufweisen, die repräsentativ für die Beleuchtungssequenz sind, die der codierten Information entspricht, die in der Nachricht enthalten ist.

15. Verfahren zur Betrugsversuchserkennung nach einem der Ansprüche 13 oder 14, bei dem
- das Endgerät mindestens eine Schnittstelle zur Kommunikation mit einem Benutzer des Systems umfasst;
- der mindestens eine erste Prozessor (P1) diese Schnittstelle derart steuert, dass sie während der Erfassung der Bildfolge mittels des Erfassungssensors dem Benutzer eine Anweisung zur Durchführung von Handlungen erteilt, wobei diese Anweisung von der Steueranweisung abhängig ist, und
- der zweite Prozessor (P2) einen Betrugsversuch erkennt, indem er überprüft, ob die übertragenen Bilder (9) der Bildfolge Merkmale aufweisen, die repräsentativ für Handlungen sind, die gegebenenfalls von dem Benutzer als Reaktion auf die Anweisung zur Durchführung von Handlungen vorgenommen wurden.

16. Verfahren zur Betrugsversuchserkennung nach einem der Ansprüche 13 bis 15, bei dem die Steueranweisung mindestens einen Befehl zum Variieren mindestens eines Erfassungsparameters umfasst.

17. Verfahren zur Betrugsversuchserkennung nach Anspruch 16, bei dem der mindestens eine Erfassungsparameter aus der Gruppe von Parametern gewählt ist, die einen Farbparameter des erfassten Bildes, einen Videoeffekt im übertragenen Bild, eine Variation der Fokussierungsentfernung des Bilderfassungssensors zwischen mehreren übertragenen Bildern, eine Variation der Empfindlichkeit des Sensors zwischen mehreren übertragenen Bildern, eine Farbvariation in einem Bild oder zwischen mehreren übertragenen Bildern, eine Variation der Fokuspunktposition zwischen mehreren übertragenen Bildern, eine Variation der Bilderfassungsfrequenz zwischen mehreren übertragenen Bildern, eine Variation der Bildgröße zwischen mehreren übertragenen Bildern, eine Variation der Bildauflösung zwischen mehreren übertragenen Bildern umfasst.

## Claims

1. A system for the acquisition of biometric information (1), comprising a remote device (2) and a communication terminal (3) which are suitable for communicating with one another via a communication network (4), the terminal (3) comprising:
- at least one sensor for the acquisition of biometric images (5);
- at least one lighting device (7) for the acquisition of the biometric images;
- at least one first processor (P1)
programmed to generate a control instruction based on a pre-established code known at the terminal and at the remote device and on an item of encoded information other than a control instruction, said item of encoded information being contained in a message (M1, M2) exchanged between the communication terminal (3) and the remote device (2), this control instruction being suitable for being executed while a series of images is acquired by the acquisition sensor (5) and for inducing, in images of the series of images acquired by the acquisition sensor (5), characteristics representative of the item of encoded information contained in said message, the processor being programmed to control the acquisition of a series of images by the acquisition sensor (5) while said control instruction is executed and to transmit at least part of the images (9) of said series of images to said remote device;
and said remote device comprising a second processor (P2) programmed to detect attempted fraud, by verifying if the transmitted images (9) from the series of images comprise characteristics representative of said item of encoded information contained in said message (M2) exchanged between the communication terminal (3) and the remote device (2).

2. The acquisition system according to claim 1, wherein said control instruction comprises at least one instruction for controlling the lighting device according to a lighting sequence corresponding to said item of encoded information contained in the message (M1, M2), said at least one first processor (P1) being programmed to control the lighting device with a view to obtaining said lighting sequence during the acquisition of said series of images by the acquisition sensor, and said second processor (P2) being programmed to detect attempted fraud, by verifying if said transmitted images (9) from the series of images comprise characteristics representative of said lighting sequence corresponding to said item of encoded information contained in said message.

3. The acquisition system according to claim 1, wherein the terminal further comprises at least one interface for communication with a user of the system, said at least one first processor (P1) being programmed to control the interface to issue, to the user, an instruction for performing actions during the acquisition of said series of images by the acquisition sensor, this instruction being based on said control instruction, and said second processor (P2) being programmed to detect attempted fraud, by verifying if said transmitted images (9) from the series of images comprise characteristics representative of said actions optionally performed by the user in response to said instruction for performing actions.

4. The acquisition system according to any one of claims 1 to 3, wherein the remote device (2) is arranged to transmit said message (M1, M2) to the communication terminal (3).

5. The acquisition system according to any one of claims 1 to 3, wherein the communication terminal (3) is arranged to transmit said message (M1, M2) to the remote device (2).

6. The acquisition system according to claim 2, wherein, among said characteristics representative of the lighting sequence, there is at least one first characteristic selected from an expected location of at least one shadow region in the image in question, an expected shape of the shadow region in the image in question, an expected light intensity in the image in question, an expected light intensity gradient in the image in question, an expected location of at least one lighting region in the image in question, an expected lighting region shape in the image in question, an expected color in the image in question.

7. The acquisition system according to either one of claims 2 or 6, wherein, among said characteristics representative of said lighting sequence, there is an evolution of said at least one first characteristic across several successive images of said series of images acquired.

8. The acquisition system according to any one of claims 1 to 7, wherein the item of encoded information is selected from a sequence number of the message, a transaction number, a date of sending of the message, a time of sending of the message, the result of arithmetic or statistical processing of a plurality of components contained in the message, a series of digits contained in the message, a message authentication code.

9. The system according to any one of claims 2 or 6 or 7, wherein the instruction for controlling the lighting device comprises at least one command selected from a command for varying the lighting intensity, a command for varying the lighting color, a command for varying the lighting frequency, a command for varying the focal range of the image acquisition sensor, a command for varying the lighting direction relative to the individual.

10. The system according to any one of claims 2 or 6 or 7 or 9, wherein said instruction for controlling the lighting device may be associated with an instruction for the user of the system, asking them to perform particular movements while they are located in front of the image acquisition sensor and while they are illuminated by said lighting device according to said lighting sequence, the second processor being programmed to detect the attempted fraud by verifying that the images from the series of images comprise characteristics representative of the user performing said particular movements.

11. The system according to any one of claims 1 to 10, wherein the second processor is programmed to generate a signal representative of suspected fraud and transmits this signal to said terminal.

12. The system according to any one of claims 1 to 11, wherein the lighting device is at least one of the lighting devices from among a means for backlighting a color screen or at least one light-emitting diode.

13. A method for detecting attempted fraud in a system for the acquisition of biometric information (1), comprising a remote computing device (2) and a communication terminal (3) which comprises a sensor for the acquisition of biometric images, at least one first processor (P1) and a lighting device and which is suitable for communicating with the remote device via a communication network (4), the method comprising the following steps:
- exchanging, via the network and between the remote device (2) and the terminal (3), a message (M1, M2) comprising an item of encoded information other than a control instruction,
- generating, by said at least one first processor (P1), at the communication terminal, a control instruction based on a pre-established code known at the terminal and at the remote device and based on said item of encoded information contained in the exchanged message (M1, M2), this control instruction being suitable for being executed while a series of images is acquired by the acquisition sensor and for inducing, in images of this series of images, characteristics representative of the encoded information, then
- acquiring, by the acquisition sensor, a series of images while said control instruction is executed,
- transmitting at least part of the images acquired by the acquisition sensor to the remote device, and
- verifying, by the remote device, that the transmitted images comprise characteristics representative of said item of encoded information contained in the message and, based on this verification, emitting a fraud signal in the event of these characteristics being absent.

14. The method for detecting attempted fraud according to claim 13, wherein said control instruction comprises at least one instruction for controlling the lighting device according to a lighting sequence corresponding to said item of encoded information contained in the message (M1, M2), and wherein said first processor (P1) controls the lighting device with a view to obtaining said lighting sequence during the acquisition of said series of images by the acquisition sensor, and wherein said second processor (P2) detects attempted fraud, by verifying if said transmitted images (9) from the series of images comprise characteristics representative of said lighting sequence corresponding to said item of encoded information contained in said message.

15. The method for detecting attempted fraud according to either one of claims 13 or 14, wherein:
- the terminal comprises at least one interface for communication with a user of the system;
- said at least one first processor (P1) controls this interface to issue, to the user, an instruction for performing actions during the acquisition of said series of images by the acquisition sensor, this instruction being based on said control instruction, and
- said second processor (P2) detects attempted fraud, by verifying if said transmitted images (9) from the series of images comprise characteristics representative of said actions optionally performed by the user in response to said instruction for performing actions.

16. The method for detecting attempted fraud according to any one of claims 13 to 15, wherein said control instruction comprises at least one command for varying at least one acquisition parameter.

17. The method for detecting attempted fraud according to claim 16, wherein said at least one acquisition parameter is selected from the group of parameters comprising an acquired image color parameter, a video effect in the transmitted image, a variation in the focal range of the image acquisition sensor between a plurality of transmitted images, a variation in the sensitivity of the sensor between a plurality of transmitted images, a variation in colors in an image or between a plurality of transmitted images, a variation in focal point location between a plurality of transmitted images, a variation in acquisition frequency between a plurality of transmitted images, a variation in image size between a plurality of transmitted images, a variation in image resolution between a plurality of transmitted images.
